# EUROPÄISCHE PATENTSCHRIFT

(11) **EP 3 661 198 B1**
(45) Veröffentlichungstag und Bekanntmachung des Hinweises auf die Patenterteilung: **22.06.2022**
(21) Anmeldenummer: 19204574.8
(22) Anmeldetag: 22.10.2019
(51) Int. Cl.: H04N 9/73, G09G 3/20

(54) **VERFAHREN ZUM KALIBRIEREN EINER ANZEIGEEINRICHTUNG EINES MOBILEN ENDGERÄTS**
METHOD FOR CALIBRATING A DISPLAY DEVICE OF A MOBILE TERMINAL
PROCEDE D'ETALONNAGE D'UN DISPOSITIF D'AFFICHAGE D'UN TERMINAL MOBILE

(30) Priorität: 27.11.2018 DE 102018129951
(43) Veröffentlichungstag der Anmeldung: 03.06.2020
(73) Patentinhaber: Miele & Cie. KG, 33332 Gütersloh (DE)
(72) Erfinder: Scharmann, Jürgen, 33442 Herzebrock-Clarholz (DE); Kersting, André, 59329 Wadersloh (DE)

(56) Entgegenhaltungen:
- US-A1- 2012 074 851
- US-A1- 2017 188 416

## Beschreibung

Die Erfindung betrifft ein Verfahren zum Kalibrieren einer Anzeigeeinrichtung eines mobilen Endgeräts, mit dem Schritt: Anzeigen zumindest einer Kalibrierfarbe mittels der Anzeigeeinrichtung des mobilen Endgeräts.

Ferner betrifft die Erfindung ein Kalibriersystem mit einem mobilen Endgerät, welches eine Anzeigeeinrichtung aufweist und dazu eingerichtet ist, zumindest eine Kalibrierfarbe mittels der Anzeigeeinrichtung anzuzeigen, und einem Haushaltsgerät, welches eine Kamera aufweist und dazu eingerichtet ist, ein die Kalibrierfarbe wiedergebendes Kalibrierbild durch Aufnehmen der Anzeigeeinrichtung des mobilen Endgeräts mittels der Kamera zu erzeugen.

Moderne Haushaltsgeräte werden zunehmend mit einer oder mehreren Kameras ausgestattet, damit Benutzer bei der Verwendung entsprechender Haushaltsgeräte unterstützt werden. Beispielsweise können Kameras eingesetzt werden, um das Gargut innerhalb eines Garraums eines Gargeräts zu überwachen. Auf diese Weise können Benutzer Textur-, Form- und/oder Farbveränderungen des sich im Garraum befindlichen Garguts während der Zubereitung erfassen und somit den Garvorgang steuern oder rechtzeitig beenden.

Entsprechende Kameras können beispielsweise Bilder oder Videos erzeugen, welche dann beispielsweise über eine zentrale Computereinheit des Herstellers des Haushaltsgeräts an ein mobiles Endgerät des Benutzers gesendet werden. Damit der Benutzer dazu in der Lage ist, das von dem Haushaltsgerät bereitgestellte Bildmaterial auswerten zu können, ist eine realistische Farbwiedergabe zwingend erforderlich. Eine ungeeignete Farbwiedergabe würde zu einer Fehlinterpretation des Bildmaterials durch den Benutzer führen, sodass der Benutzungskomfort des Haushaltsgeräts sogar beeinträchtigt werden kann. Beispielsweise können unechte Farbwiedergaben zu einer Fehlinterpretation des Gar- oder Backzustandes eines Lebensmittels führen.

Um diesem Problem zu begegnen, wird die Sensorik eingesetzter Kameras in geeigneter Weise kalibriert. Darüber hinaus wird der Aufnahmebereich der Kameras der Haushaltsgeräte in geeigneter Weise ausgeleuchtet, um realistische Wiedergaben des sich in der Zubereitung befindlichen Lebensmittels zu generieren.

Es hat sich jedoch gezeigt, dass die Anzeigeeinrichtungen mobiler Endgeräte häufig nicht dazu geeignet sind, realistische Darstellungen wiederzugeben, welche einen Benutzer eines Haushaltsgeräts bei der Verwendung des Haushaltsgeräts unterstützen. Darüber hinaus unterscheiden sich die Anzeigeeinrichtungen unterschiedlicher Endgeräte hinsichtlich ihrer Wiedergabeeigenschaften, sodass Bildmaterial auf verschiedenen Endgeräten unterschiedlich dargestellt wird. Zur Kalibrierung von Anzeigeeinrichtungen von Endgeräten ist bisher die Aufnahme von genormten Farbtafeln oder die Verwendung geeigneter Hardware, wie etwa einem Kolorimeter, notwendig.

US 2012/074851 A1 offenbart ein Verfahren und System zur Display-Kalibrierung mit Rückmeldung durch eine Kameraeinrichtung. US 2017/188416 A1 offenbart ein Haushaltsgerät mit Speisenbehandlungsraum und Kamera.

Die der Erfindung zugrundeliegende Aufgabe besteht somit darin, eine möglichst realistische Wiedergabe von Bildmaterial, welches von einer Kamera eines Haushaltsgeräts erzeugt wird, mit geringem Aufwand zu ermöglichen.

Die Aufgabe wird gelöst durch ein Verfahren der eingangs genannten Art, wobei im Rahmen des erfindungsgemäßen Verfahrens ein die Kalibrierfarbe wiedergebendes Kalibrierbild durch Aufnehmen der Anzeigeeinrichtung des mobilen Endgeräts mittels der Kamera eines Haushaltsgeräts erzeugt wird und die Anzeigeeinrichtung des mobilen Endgeräts auf Grundlage der Abweichungen der Farbwerte des Kalibrierbildes von der Kalibrierfarbe kalibriert wird.

Die Erfindung macht sich die Erkenntnis zunutze, dass zur Kalibrierung einer Anzeigeeinrichtung eines mobilen Endgeräts zur realistischen Wiedergabe von Bildmaterial, welches von einer Kamera eines Haushaltsgeräts erzeugt wird, ein Farbabgleich zwischen den Farbwerten eines durch das Haushaltsgerät erzeugten Kalibrierbildes und einer erwarteten Kalibrierfarbe erfolgen kann. Anstatt von genormten Farbtafeln kann die Anzeigeeinrichtung des mobilen Endgeräts zur Wiedergabe entsprechender Farben im Rahmen des Kalibriervorgangs genutzt werden. Somit ist die Beschaffung entsprechender Farbtafeln durch den Benutzer nicht notwendig. Ferner ist zur Kalibrierung der Anzeigeeinrichtung des mobilen Endgeräts auch keine zusätzliche Hardware wie beispielsweise ein Kolorimeter und eine entsprechende Software auf dem mobilen Endgerät notwendig. Somit kann der Kalibriervorgang durch den Benutzer vorgenommen werden, ohne das zeit- und/oder kostenaufwendige Beschaffungsmaßnahmen im Vorfeld notwendig werden. Es kommt also zu einer erheblichen Verbesserung des Kalibriervorgangs.

Vorzugsweise wird die Kalibrierfarbe einheitlich auf der gesamten Anzeigeeinrichtung oder innerhalb eines Teilbereichs der Anzeigeeinrichtung des mobilen Endgeräts angezeigt. Die Kalibrierfarbe kann eine Normfarbe bzw. eine Farbnormale sein. Zum Anzeigen der Kalibrierfarbe und zum Kalibrieren der Anzeigeeinrichtung des mobilen Endgeräts wird vorzugsweise eine Anwendung auf dem mobilen Endgerät genutzt, welche eine entsprechende Farbanzeige und Kalibrierung erlaubt. Das mobile Endgerät kann beispielsweise ein Smartphone oder Tablet sein.

Alternativ kann das Verfahren auch zum Kalibrieren einer Anzeigeeinrichtung eines stationären Computermonitors verwendet werden. Außerdem kann alternativ zum Kalibrieren der Anzeigeeinrichtung des mobilen Endgeräts oder des stationären Computermonitors auf Grundlage der Abweichungen der Farbwerte des Kalibrierbildes von der Kalibrierfarbe die vorhandene Kalibrierung beibehalten werden und die Farben späterer Bildaufnahmen der Kamera des Haushaltsgeräts entsprechend angepasst werden. Somit wird die Kalibrierung für einzelne Bildaufnahmen der Kamera des Haushaltsgeräts fingiert. Hierbei ist jedoch zu berücksichtigen, dass es sich um eine gerätespezifische Kalibrierung handelt, sodass entsprechende Bildanpassungen nur zu realistischen Wiedergaben bei der Betrachtung durch das jeweilige Endgerät führen.

In der bevorzugten Ausführungsform des erfindungsgemäßen Verfahrens ist das mobile Endgerät während des Erzeugens des Kalibrierbildes innerhalb des Haushaltsgeräts angeordnet. Vorzugsweise wird das mobile Endgerät durch einen Benutzer zum Kalibrieren der Anzeigeeinrichtung des mobilen Endgeräts in dem Haushaltsgerät positioniert. Wenn das Haushaltsgerät als Gargerät ausgebildet ist, befindet sich das mobile Endgerät während des Erzeugens des Kalibrierbildes vorzugsweise innerhalb eines Garraums des Gargeräts. Vorzugsweise wird vor dem Erzeugen des Kalibrierbildes ein Zustand des Haushaltsgeräts herbeigeführt, in welchem sich das Haushaltgerät auch bei der Zubereitung von Lebensmitteln befindet. Auf diese Weise erfolgt die Kalibrierung angepasst an Bedingungen, welche üblicherweise bei der Verwendung einer entsprechenden Überwachungsfunktion durch einen Benutzer vorliegen.

In einer weiteren bevorzugten Ausführungsform des erfindungsgemäßen Verfahrens wird das Kalibrierbild von dem Haushaltsgerät an eine zentrale Computereinheit gesendet, wobei die zentrale Computereinheit durch Auswerten der Abweichungen der Farbwerte des Kalibrierbildes von der Kalibrierfarbe Anzeigekorrekturwerte für die Kalibrierung der Anzeigeeinrichtung des mobilen Endgeräts ermittelt. Vorzugsweise umfasst das Verfahren das Senden der ermittelten Anzeigekorrekturwerte für die Kalibrierung der Anzeigeeinrichtung des mobilen Endgeräts von der zentralen Computereinheit an das mobile Endgerät. Vorzugsweise weist das Haushaltsgerät ein Kommunikationsmodul auf, über welches das Haushaltsgerät in ein lokales Drahtlosnetzwerk eingebunden ist. Über das lokale Drahtlosnetzwerk verfügt das Haushaltsgerät bevorzugt über eine Internetverbindung, sodass das Senden des Kalibrierbildes von dem Haushaltsgerät an die zentrale Computereinheit unter Verwendung des Internets erfolgen kann. Das mobile Endgerät verfügt vorzugsweise ebenfalls über einen Internetzugang, entweder über das lokale Drahtlosnetzwerk oder über eine Mobilfunkverbindung. Auf diese Weise können dem mobilen Endgerät die von der zentralen Computereinheit ermittelten Anzeigekorrekturwerte für die Kalibrierung der Anzeigeeinrichtung (indirekt) über das Internet bereitgestellt werden, alternativ auch (direkt) über eine lokale Netzwerkverbindung.

In einer alternativen Ausführungsform des erfindungsgemäßen Verfahrens wird das Kalibrierbild von dem Haushaltsgerät an das mobile Endgerät gesendet, wobei das mobile Endgerät durch Auswerten der Abweichungen der Farbwerte des Kalibrierbildes von der Kalibrierfarbe Anzeigekorrekturwerte für die Kalibrierung der eigenen Anzeigeeinrichtung ermittelt. In diesem Fall kann die Kalibrierung auch über eine Direktverbindung, etwa eine Adhoc-Verbindung, zwischen dem Haushaltsgerät und dem mobilen Endgerät umgesetzt werden. Die Direktverbindung kann beispielsweise auf dem Bluetooth-Standard basieren. Erfindungsgemäß ist unter "Senden des Kalibrierbilds" auch zu verstehen, dass von dem Haushaltsgerät Informationen an das mobile Endgerät gesendet werden, wobei das mobile Endgerät anhand dieser Informationen ein dort gespeichertes Kalibrierbild auswählen oder ein entsprechendes Kalibrierbild erzeugen kann.

Das erfindungsgemäße Verfahren wird ferner dadurch vorteilhaft weitergebildet, dass das Kalibrieren der Anzeigeeinrichtung des mobilen Endgeräts für den gesamten Betrieb des mobilen Endgeräts oder für die Verwendung von einer oder mehreren auf dem mobilen Endgerät installierten Anwendungen erfolgt. Beispielsweise kann die Kalibrierung anwendungsspezifisch erfolgen, sodass eine Farbwertanpassung nur bei der Verwendung einer Anwendung erfolgt, mittels welcher ein Datenaustausch mit dem Haushaltsgerät möglich ist und welche die Wiedergabe von Bildaufnahmen der Kamera des Haushaltsgeräts erlaubt. Wenn das Kalibrieren der Anzeigeeinrichtung des mobilen Endgeräts für den gesamten Betrieb des mobilen Endgeräts erfolgt, erfolgt eine Farbwertanpassung, welche sich auf die Verwendung aller Anwendungen auf dem mobilen Endgerät erstreckt.

In einer weiteren bevorzugten Ausführungsform des erfindungsgemäßen Verfahrens werden mehrere Kalibrierfarben mittels der Anzeigeeinrichtung des mobilen Endgeräts hintereinander angezeigt, wobei mehrere jeweils zumindest eine Kalibrierfarbe wiedergebende Kalibrierbilder durch Aufnehmen der Anzeigeeinrichtung des mobilen Endgeräts mittels der Kamera des Haushaltsgeräts erzeugt werden und das Kalibrieren der Anzeigeeinrichtung des mobilen Endgeräts auf Grundlage der Abweichungen der Farbwerte der Kalibrierbilder von den jeweiligen Kalibrierfarben erfolgt. Die Farbechtheit von Bildern, welche durch die Anzeigeeinrichtung des mobilen Endgeräts angezeigt werden, kann dadurch erhöht werden, dass bei der Kalibrierung verschiedene Kalibrierfarben berücksichtigt werden. Dabei kann die Kalibrierung hinsichtlich bestimmter Farbbereiche besonders präzise erfolgen. Vorzugsweise werden unterschiedliche Brauntöne als Kalibrierfarben verwendet, sodass unterschiedliche Backzustände von Teigwaren besonders realistisch und farbecht dargestellt werden.

In einer anderen Ausführungsform des erfindungsgemäßen Verfahrens erfolgt ein Starten einer Kalibrierfunktion des Haushaltsgeräts, welche das Haushaltsgerät dazu veranlasst, ein oder mehrere Kalibrierbilder durch Aufnehmen mittels der Kamera des Haushaltsgeräts zu erzeugen und das eine oder die mehreren erzeugten Kalibrierbilder der zentralen Computereinheit und/oder dem mobilen Endgerät bereitzustellen. Das Starten der Kalibrierfunktion des Haushaltsgeräts kann durch eine Anwendung auf dem mobilen Endgerät oder manuell am Haushaltsgerät veranlasst werden. Beispielsweise umfasst die Kalibrierfunktion außerdem eine Prüfroutine, welche vor dem Erzeugen des einen oder der mehreren Kalibrierbilder durchgeführt wird. Dabei kann beispielsweise der Zustand des Haushaltsgeräts überprüft werden. Die Überprüfung des Haushaltsgerätezustands kann beispielsweise das Überprüfen einer Beleuchtungseinrichtung und/oder das Überprüfen des Öffnungszustandes von Gerätetüren umfassen.

Darüber hinaus ist ein erfindungsgemäßes Verfahren vorteilhaft, bei welchem das Haushaltsgerät als Gargerät ausgebildet ist, welches einen Garraum zum Zubereiten von Lebensmitteln aufweist, wobei die Kamera des Haushaltsgeräts auf den Garraum ausgerichtet ist. Das Haushaltsgerät kann beispielsweise ein Backgerät, insbesondere ein Backofen sein. Alternativ kann das Haushaltsgerät auch als Bratgerät, Mikrowelle, Dampfgarer, Grillgerät oder Fritteuse ausgebildet sein. In einer alternativen Ausführungsform kann das Haushaltsgerät auch ein Kühl- und/oder Gefriergerät sein. Darüber hinaus kann das Haushaltsgerät auch ein Reinigungsgerät, wie beispielsweise ein Geschirrspüler sein.

Die der Erfindung zugrundeliegende Aufgabe wird ferner durch ein Kalibriersystem der eingangs genannten Art gelöst, wobei das mobile Endgerät des erfindungsgemäßen Kalibriersystems dazu eingerichtet ist, die Anzeigeeinrichtung auf Grundlage der Abweichungen der Farbwerte des Kalibrierbildes von der Kalibrierfarbe zu kalibrieren. Insbesondere ist das Kalibriersystem dazu eingerichtet, das Verfahren zum Kalibrieren einer Anzeigeeinrichtung eines mobilen Endgeräts nach einer der vorstehend beschriebenen Ausführungsformen auszuführen. Hinsichtlich der Vorteile und Modifikationen des erfindungsgemäßen Kalibriersystems wird somit auf die Vorteile und Modifikationen des erfindungsgemäßen Verfahrens verwiesen.

In einer bevorzugten Ausführungsform des erfindungsgemäßen Kalibriersystems weist dieses eine zentrale Computereinheit auf, welche dazu eingerichtet ist, Anzeigekorrekturwerte für die Kalibrierung der Anzeigeeinrichtung des mobilen Endgeräts durch Auswerten der Abweichungen der Farbwerte des Kalibrierbildes von der Kalibrierfarbe zu ermitteln. Insbesondere ist auch diese Ausführungsform des Kalibriersystems dazu eingerichtet, dass Verfahren zum Kalibrieren einer Anzeigeeinrichtung eines mobilen Endgeräts nach einer der vorstehend beschriebenen Ausführungsformen auszuführen. Demnach wird hinsichtlich der Vorteile und Modifikationen dieser Ausführungsform ebenfalls auf die Vorteile und Modifikationen des erfindungsgemäßen Verfahrens verwiesen.

Ausführungsbeispiele der Erfindung sind in den Zeichnungen rein schematisch dargestellt und werden nachfolgend näher beschrieben. Es zeigen
- Fig. 1: ein Ausführungsbeispiel des erfindungsgemäßen Kalibriersystems in einer schematischen Darstellung;
- Fig. 2: einzelne Schritte des Verfahrens zum Kalibieren einer Anzeigeeinrichtung eines mobilen Endgeräts; und
- Fig. 3: einzelne Schritte des Verfahrens zum Kalibieren einer Anzeigeeinrichtung eines mobilen Endgeräts.

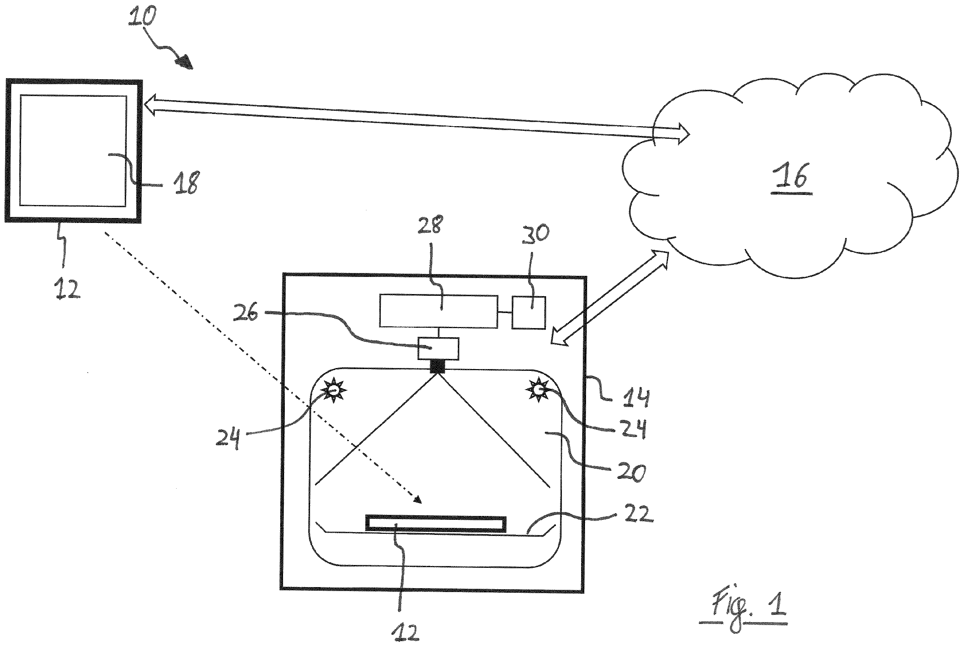

Die Fig. 1 zeigt ein Kalibriersystem 10 mit einem mobilen Endgerät 12, einem Haushaltsgerät 14 und einer zentralen Computereinheit 16.

Das mobile Endgerät 12 ist als Smartphone ausgebildet und weist eine als Touchscreen ausgebildete Anzeigeeinrichtung 18 auf. Auf dem mobilen Endgerät 12 ist eine Anwendung installiert, welche eine Funkkommunikation mit dem zentralen Computersystem 16 erlaubt. Mittels der Anwendung auf dem mobilen Endgerät 12 lässt sich außerdem die Anzeigeeinrichtung 18 des mobilen Endgeräts 12 kalibrieren, damit von dem Haushaltsgerät 14 erzeugtes Bildmaterial realistisch und farbecht auf der Anzeigeeinrichtung 18 des mobilen Endgeräts 12 angezeigt werden kann.

Das Haushaltsgerät 14 ist als Gargerät, nämlich als Backofen, ausgebildet. Das Haushaltsgerät 14 weist einen Garraum 20 zum Zubereiten von Lebensmitteln auf. Innerhalb des Garraums 20 befindet sich ein Gargutträger 22, auf welchem die zuzubereitenden Lebensmittel während der Zubereitung zu positionieren sind. Ferner wird der Garraum 20 des Haushaltsgeräts 14 durch Beleuchtungseinrichtungen 24 ausgeleuchtet. Die Beleuchtungseinrichtungen 24 sind als LEDs ausgebildet. In dem oberen Bereich des Garraums 20 ist eine Kamera 26 angeordnet, welche auf den Gargutträger 22 innerhalb des Garraums 20 ausgerichtet ist. Die Kamera 26 ist mit einer Steuerungseinrichtung 28 signalleitend verbunden, wobei die Steuerungseinrichtung 28 ebenfalls mit einem Kommunikationsmodul 30 verbunden ist. Mittels der Steuerungseinrichtung 28 kann der Betrieb des Haushaltsgeräts 14 gesteuert werden. Somit erlaubt die Steuerungseinrichtung 28 auch die Steuerung der Beleuchtungseinrichtungen 24, der Kamera 26 und des Kommunikationsmoduls 30. Das Kommunikationsmodul 30 erlaubt eine Kommunikation mit der zentralen Computereinheit 16.

Das mobile Endgerät 12 und das Haushaltsgerät 14 sind in einem lokalen Drahtlosnetzwerk angemeldet, welches dem mobilen Endgerät 12 und dem Haushaltsgerät 14 eine Internetverbindung zur Verfügung stellt. Die Internetverbindung des lokalen Drahtlosnetzwerks wird zur Kommunikation mit der zentralen Computereinheit 16 genutzt.

Die zentrale Computereinheit 16 ist als Server ausgebildet und wird von dem Hersteller des Haushaltsgeräts 14 nach Art eines Cloudsystems betrieben.

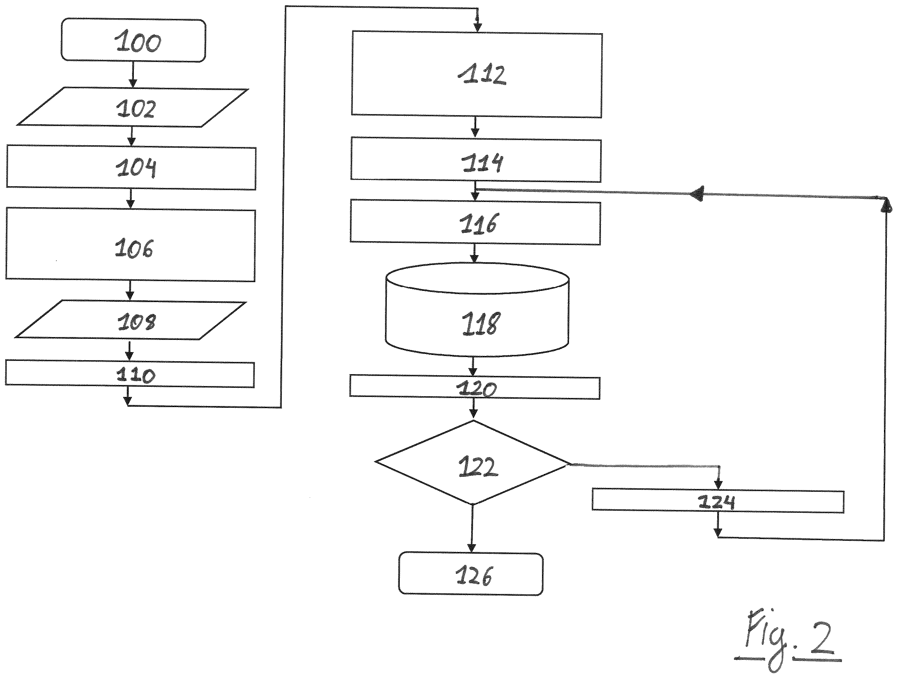

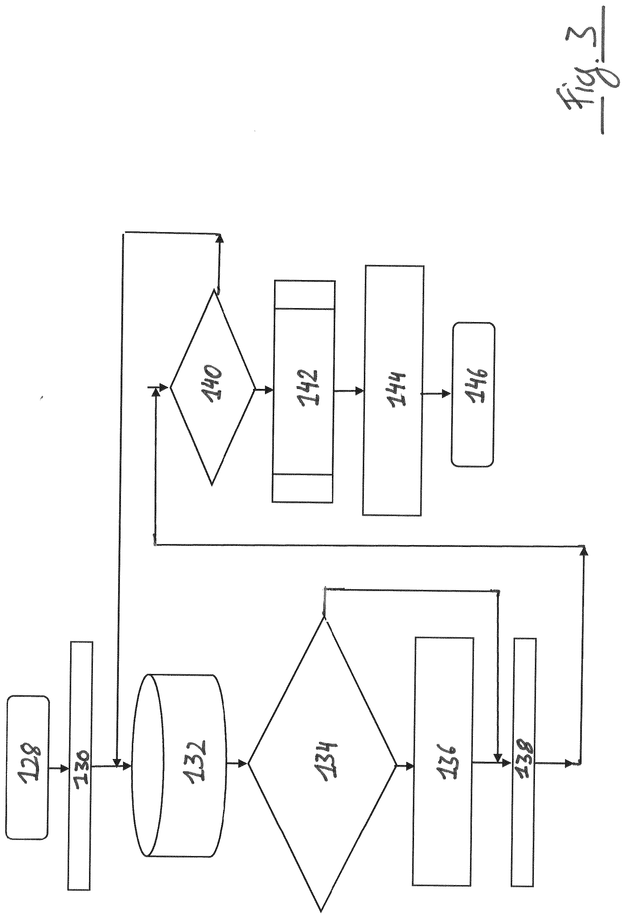

Mittels des dargestellten Kalibriersystems 10 ist ein Verfahren zum Kalibrieren der Anzeigeeinrichtung 18 des mobilen Endgeräts 12 ausführbar, wobei einzelne Schritte des Verfahrens in der Fig. 2 und der Fig. 3 dargestellt sind.

Gemäß der Fig. 2 wird das Verfahren zum Kalibrieren der Anzeigeeinrichtung 18 des mobilen Endgeräts 12 mit dem Schritt 100 gestartet. Im Schritt 102 erfolgt eine Öffnung der Garraumtür des Haushaltsgeräts 14, sodass der Garraum 20 des Haushaltsgeräts 14 zugänglich ist. Im Schritt 104 erfolgt das Ausführen einer Anwendung auf dem mobilen Endgerät 12, wobei die Anwendung ein Kalibrieren der Anzeigeeinrichtung 18 des mobilen Endgeräts 12 erlaubt. Da die Anwendung über eine Vielzahl weiterer Funktionen verfügt, ist im Schritt 106 zunächst die Kalibrierfunktion in der Anwendung auf dem mobilen Endgerät 12 auszulösen. Dies kann vom Benutzer am mobilen Endgerät 12 oder dem Haushaltsgerät 14 ausgelöst werden.

Nachdem die Kalibrierfunktion ausgelöst wurde, ist das mobile Endgerät 12 im Schritt 108 derart in den Garraum 20 des Haushaltsgerät 14 einzulegen, dass die Kamera 26 des Haushaltsgeräts 14 die Anzeigeeinrichtung 18 des mobilen Endgeräts 12 aufnehmen kann. Im Schritt 110 wird ein Zählwert durch die Anwendung auf dem mobilen Endgerät 12 auf den Wert 1 gesetzt. Nachfolgend wird im Schritt 112 eine den Zählwert zugeordnete Kalibrierfarbe mittels der Anzeigeeinrichtung 18 des mobilen Endgeräts 12 angezeigt. Die Kalibrierfarbe entspricht einer Farbnormalen und wird einheitlich auf der gesamten Anzeigeeinrichtung 18 des mobilen Endgeräts angezeigt. Das Anzeigen der Kalibrierfarbe wird durch die Anwendung auf dem mobilen Endgerät 12 veranlasst.

Anschließend ist im Schritt 114 die Garraumtür des Haushaltsgeräts 14 zu schließen und die Garraumbeleuchtung durch Aktivieren der Beleuchtungseinrichtungen 24 einzuschalten. Durch das Schließen der Garraumtür und das Einschalten des Garraumbeleuchtung wird ein Zustand des Haushaltsgeräts 14 herbeigeführt, welcher dem Zustand beim Zubereiten von Lebensmitteln entspricht.

Im Schritt 116 wird ein die Kalibrierfarbe wiedergebendes Kalibrierbild durch Aufnehmen der Anzeigeeinrichtung 18 des mobilen Endgeräts 12 mittels der Kamera 26 des Haushaltsgeräts 14 erzeugt. Das mobile Endgeräts 12 ist also während des Erzeugens des Kalibrierbildes innerhalb des Haushaltsgeräts 14 angeordnet.

Im Schritt 118 erfolgt ein Senden des erzeugten Kalibrierbildes von dem Haushaltsgerät 14 an die zentrale Computereinheit 16. Ferner wird der zentralen Computereinheit 16 von dem Haushaltsgerät 14 mitgeteilt, welcher Zählwert dem Kalibrierbild zugeordnet ist. Das Senden des Kalibrierbilds von dem Haushaltsgerät 14 an die zentrale Computereinheit 16 erfolgt unter Verwendung des Kommunikationsmoduls 30 des Haushaltsgeräts 14. Dabei wird eine Internetverbindung genutzt, welche dem Haushaltsgerät 14 durch ein lokales Drahtlosnetzwerk zur Verfügung gestellt wird, in welches das Kommunikationsmodul 30 angemeldet ist.

Nach Versenden des Kalibrierbildes sowie der Zählwertinformation zu dem versendeten Kalibrierbild wird im Schritt 120 der Zählwert um 1 erhöht. Im Schritt 122 findet eine Prüfung statt, ob der Zählwert bereits einen Maximalzählwert erreicht hat. Der Maximalzählwert wird von der Anwendung auf dem mobilen Endgerät 12 vorgegeben. Wenn der Maximalzählwert noch nicht erreicht wurde, wird im Schritt 124 eine weitere Kalibrierfarbe mittels der Anzeigeeinrichtung 18 des mobilen Endgeräts 12 angezeigt, wobei die weitere angezeigte Kalibrierfarbe dem aktuellen Zählwert zugeordnet ist. In den Schritten 116 und 118 erfolgt wieder ein Erzeugen eines die Kalibrierfarbe wiedergebenden Kalibrierbildes sowie ein Versenden des erzeugten Kalibrierbildes an die zentrale Computereinheit 16. Diese Bilderzeugungs- und Bereitstellungsschleife wird solange wiederholt, bis der Zählwert den Maximalwert erreicht hat. Es werden somit im Rahmen des Verfahrens mehrere Kalibrierfarben mittels der Anzeigeeinrichtung 18 des mobilen Endgeräts 12 angezeigt, wobei mehrere jeweils eine Kalibrierfarbe wiedergebende Kalibrierbilder durch Aufnehmen der Anzeigeeinrichtung 18 des mobilen Endgeräts 12 mittels der Kamera 26 des Haushaltsgeräts 14 erzeugt werden.

Im Schritt 126 werden die haushaltsgerätebezogenen Kalibrierschritte zunächst beendet.

Die Fig. 3 zeigt die Verfahrensschritte, welche durch das mobile Endgerät 12 und die zentrale Computereinheit 16 ausgeführt werden. Im Schritt 128 erfolgt zunächst ein Starten der Kalibrierfunktion auf der zentralen Computereinheit 16. Im Schritt 130 wird ein Zählwert durch die zentrale Computereinheit 16 auf den Wert 1 gesetzt.

Im Schritt 132 wird das Kalibrierbild, welches dem aktuellen Zählwert zugeordnet ist, eingelesen. Im Schritt 134 wird geprüft, ob die Farbwerte des Kalibrierbildes von der im Zählwert zugeordneten Kalibrierfarbe abweichen. Wenn entsprechende Abweichungen der Farbwerte des Kalibrierbildes von der Kalibrierfarbe festgestellt werden, erfolgt im Schritt 136 eine konkrete Berechnung der Abweichungen des Kalibrierbildes von der Kalibrierfarbe. Wenn keine Abweichungen festgestellt werden, wird die Berechnung der Abweichungen, also der Schritt 136, übersprungen. Im Schritt 138 wird dann der Zählwert um einen Wert erhöht, bevor im Schritt 140 eine Abfrage erfolgt, ob der Zählwert bereits einen vorgegebenen Maximalwert erreicht hat. Wenn der vorgegebene Maximalwert noch nicht erreicht wurde, wird ein dem erhöhten Zählwert zugeordnetes Kalibrierbild im Schritt 132 eingelesen, sodass im Schritt 134 festgestellt werden kann, ob die Farbwerte des dem aktuellen Zählwert zugeordneten Kalibrierbildes von der Kalibrierfarbe abweichen. Falls dies der Fall ist, erfolgt im Schritt 136 erneut eine Berechnung der Abweichungen. Falls dies nicht der Fall ist, erfolgt keine entsprechende Abweichungsberechnung. Diese Schleife wird wiederholt, bis der Zählwert den vorgegebenen Maximalwert erreicht hat.

Wenn der Zählwert den vorgegebenen Maximalwert erreicht hat, werden im Schritt 142 Anzeigekorrekturwerte für die Kalibrierung der Anzeigeeinrichtung 18 des mobilen Endgeräts 12 ermittelt. Das Ermitteln der Anzeigekorrekturwerte erfolgt auf Grundlage einer Auswertung der Abweichungen der Farbwerte der jeweiligen Kalibrierbilder von den Kalibrierfarben und wird durch die zentrale Computereinheit 16 durchgeführt. Das Kalibrieren der Anzeigeeinrichtung 18 des mobilen Endgeräts 12 erfolgt also auf Grundlage der Abweichungen der Farbwerte mehrerer Kalibrierbilder von den jeweiligen Kalibrierfarben. Die ermittelten Anzeigekorrekturwerte für die Kalibrierung der Anzeigeeinrichtung 18 des mobilen Endgeräts 12 werden dann von der zentralen Computereinheit 16 an das mobile Endgerät 12 gesendet. Hierbei wird ebenfalls das Internet sowie das lokale Drahtlosnetzwerk genutzt, in welchem das mobile Endgerät 12 angemeldet ist. Wenn das mobile Endgerät 12 nicht in einem Drahtlosnetzwerk angemeldet ist, kann die Bereitstellung der ermittelten Anzeigekorrekturwerte auch über Mobilfunk erfolgen.

Im Schritt 144 erfolgt ein Kalibrieren der Anzeigeeinrichtung 18 des mobilen Endgeräts 12 auf Grundlage der Abweichungen der Farbwerte der Kalibrierbilder von den jeweiligen Kalibrierfarben. Nach Durchführen der Kalibrierung werden Aufnahmen der Kamera 26 des Haushaltsgeräts 14 realistisch und farbecht auf der Anzeigeeinrichtung 18 des mobilen Endgeräts 12 angezeigt. Somit kann ein Benutzer beispielsweise den Garzustand von Lebensmitteln innerhalb des Garraums 20 des Haushaltsgeräts 14 überwachen und aufgrund von Textur-, Form- und/oder Farbveränderungen Rückschlüsse auf den Endzeitpunkt des Zubereitungsvorgangs ziehen. Das Kalibrieren der Anzeigeeinrichtung 18 des mobilen Endgeräts 12 erfolgt für den gesamten Betrieb des mobilen Endgeräts 12, also auch für sämtliche Anwendungen, welche auf dem mobilen Endgerät 12 installiert sind. Alternativ hierzu ist auch eine anwendungsspezifische Kalibrierung der Anzeigeeinrichtung 18 vorstellbar, bei welcher entsprechende Kalibriereinstellungen lediglich beim Verwenden einer entsprechenden Anwendung auf dem mobilen Endgerät 12 eingestellt werden.

Im Schritt 146 wird die Kalibrierfunktion beendet. In dem erläuterten Verfahrensbeispiel erfolgt das Ermitteln der Anzeigekorrekturwerte durch die zentrale Computereinheit 16. In einer alternativen Ausführungsform ist es jedoch auch möglich, dass die Anzeigekorrekturwerte für die Kalibrierung der Anzeigeeinrichtung 18 des mobilen Endgeräts 12 direkt von dem mobilen Endgerät 12 ermittelt werden.

### Bezugszeichen

- 10: Kalibriersystem
- 12: mobiles Endgerät
- 14: Haushaltsgerät
- 16: zentrale Computereinheit
- 18: Anzeigeeinrichtung
- 20: Garraum
- 22: Gargutträger
- 24: Beleuchtungseinrichtungen
- 26: Kamera
- 28: Steuerungseinrichtung
- 30: Kommunikationsmodul

- 100-146: Verfahrensschritte

## Patentansprüche

1. Verfahren zum Kalibrieren einer Anzeigeeinrichtung (18) eines mobilen Endgeräts (12), mit den Schritten:
- Anzeigen zumindest einer Kalibrierfarbe mittels der Anzeigeeinrichtung (18) des mobilen Endgeräts (12);
- Erzeugen eines die Kalibrierfarbe wiedergebenden Kalibrierbildes durch Aufnehmen der Anzeigeeinrichtung (18) des mobilen Endgeräts (12) mittels einer Kamera (26) eines Haushaltsgeräts (14); und
- Kalibrieren der Anzeigeeinrichtung (18) des mobilen Endgeräts (12) auf Grundlage der Abweichungen der Farbwerte des Kalibrierbildes von der Kalibrierfarbe
**dadurch gekennzeichnet, dass** das mobile Endgerät (12) während des Erzeugens des Kalibrierbildes innerhalb des Haushaltsgeräts (14) angeordnet ist.

2. Verfahren nach Anspruch 1,
**gekennzeichnet durch** zumindest einen der folgenden Schritte:
- Senden des Kalibrierbildes von dem Haushaltsgerät (14) an eine zentrale Computereinheit (16);
- Ermitteln von Anzeigekorrekturwerten für die Kalibrierung der Anzeigeeinrichtung (18) des mobilen Endgeräts (12) durch Auswerten der Abweichungen der Farbwerte des Kalibrierbildes von der Kalibrierfarbe durch die zentrale Computereinheit (16);
- Senden der ermittelten Anzeigekorrekturwerte für die Kalibrierung der Anzeigeeinrichtung (18) des mobilen Endgeräts (12) von der zentralen Computereinheit (16) an das mobile Endgerät (12).

3. Verfahren nach einem der vorstehenden Ansprüche,
**gekennzeichnet durch** zumindest einen der folgenden Schritte:
- Senden des Kalibrierbildes oder von Informationen von dem Haushaltsgerät (14) an das mobile Endgerät (12), wobei die Informationen es dem mobilen Endgerät ermöglichen, ein Kalibrierbild auszuwählen oder zu erzeugen;
- Ermitteln von Anzeigekorrekturwerten für die Kalibrierung der Anzeigeeinrichtung (18) des mobilen Endgeräts (12) durch Auswerten der Abweichungen der Farbwerte des Kalibrierbildes von der Kalibrierfarbe durch das mobile Endgerät (12).

4. Verfahren nach einem der vorstehenden Ansprüche,
**dadurch gekennzeichnet, dass** das Kalibrieren der Anzeigeeinrichtung (18) des mobilen Endgeräts (12) für den gesamten Betrieb des mobilen Endgeräts (12) oder für die Verwendung von einer oder mehreren auf dem mobilen Endgerät (12) installierten Anwendungen erfolgt.

5. Verfahren nach einem der vorstehenden Ansprüche,
**dadurch gekennzeichnet, dass** mehrere Kalibrierfarben mittels der Anzeigeeinrichtung (18) des mobilen Endgeräts (12) hintereinander angezeigt werden, wobei mehrere jeweils zumindest eine Kalibrierfarbe wiedergebende Kalibrierbilder durch Aufnehmen der Anzeigeeinrichtung (18) des mobilen Endgeräts (12) mittels der Kamera (26) des Haushaltsgeräts (14) erzeugt werden und das Kalibrieren der Anzeigeeinrichtung (18) des mobilen Endgeräts (12) auf Grundlage der Abweichungen der Farbwerte der Kalibrierbilder von den jeweiligen Kalibrierfarben erfolgt.

6. Verfahren nach einem der vorstehenden Ansprüche,
**gekennzeichnet durch** den Schritt:
- Starten einer Kalibrierfunktion des Haushaltsgeräts (14), welche das Haushaltsgerät (14) dazu veranlasst, ein oder mehrere Kalibrierbilder durch Aufnehmen mittels der Kamera (26) des Haushaltsgeräts (14) zu erzeugen und das eine oder die mehreren erzeugten Kalibrierbilder der zentralen Computereinheit (16) und/oder dem mobilen Endgerät (12) bereitzustellen,
wobei das Starten der Kalibrierfunktion des Haushaltsgeräts (14) durch eine Anwendung auf dem mobilen Endgerät (12) oder manuell am Haushaltsgerät (14) veranlasst wird.

7. Verfahren nach einem der vorstehenden Ansprüche,
**dadurch gekennzeichnet, dass** das Haushaltsgerät (14) als Gargerät ausgebildet ist, welches einen Garraum (20) zum Zubereiten von Lebensmitteln aufweist, wobei die Kamera (26) des Haushaltsgeräts (14) auf den Garraum (20) ausgerichtet ist.

8. Kalibriersystem (10), mit
- einem mobilen Endgerät (12), welches eine Anzeigeeinrichtung (18) aufweist und dazu eingerichtet ist, zumindest eine Kalibrierfarbe mittels der Anzeigeeinrichtung (18) anzuzeigen; und
- einem Haushaltsgerät (14), welches eine Kamera (26) aufweist und dazu eingerichtet ist, ein die Kalibrierfarbe wiedergebendes Kalibrierbild durch Aufnehmen der Anzeigeeinrichtung (18) des mobilen Endgeräts (12) mittels der Kamera (26) zu erzeugen, während das mobile Endgerät (12) innerhalb des Haushaltsgeräts (14) angeordnet ist;
wobei das mobile Endgerät (12) dazu eingerichtet ist, die Anzeigeeinrichtung (18) auf Grundlage der Abweichungen der Farbwerte des Kalibrierbildes von der Kalibrierfarbe zu kalibrieren.

9. Kalibriersystem (10) nach Anspruch 8,
**gekennzeichnet durch** eine zentrale Computereinheit (16), welche dazu eingerichtet ist, Anzeigekorrekturwerte für die Kalibrierung der Anzeigeeinrichtung (18) des mobilen Endgeräts (12) durch Auswerten der Abweichungen der Farbwerte des Kalibrierbildes von der Kalibrierfarbe zu ermitteln.

## Claims

1. Method for calibrating a display device (18) of a mobile terminal (12), comprising the steps of:
- displaying at least one calibration colour by means of the display device (18) of the mobile terminal (12);
- generating a calibration image that reproduces the calibration colour by recording the display device (18) of the mobile terminal (12) by means of a camera (26) of a domestic appliance (14); and
- calibrating the display device (18) of the mobile terminal (12) on the basis of the deviations of the colour values of the calibration image from the calibration colour,
**characterised in that** the mobile terminal (12) is arranged within the domestic appliance (14) during the generation of the calibration image.

2. Method according to claim 1,
**characterised by** at least one of the following steps:
- transmitting the calibration image from the domestic appliance (14) to a central computer unit (16);
- determining display correction values for calibrating the display device (18) of the mobile terminal (12) by evaluating the deviations of the colour values of the calibration image from the calibration colour by means of the central computer unit (16);
- transmitting the determined display correction values for calibrating the display device (18) of the mobile terminal (12) from the central computer unit (16) to the mobile terminal (12).

3. Method according to either of the preceding claims,
**characterised by** at least one of the following steps:
- transmitting the calibration image or information from the domestic appliance (14) to the mobile terminal (12), the information allowing the mobile terminal to select or generate a calibration image;
- determining display correction values for calibrating the display device (18) of the mobile terminal (12) by evaluating the deviations of the colour values of the calibration image from the calibration colour by means of the mobile terminal (12).

4. Method according to any of the preceding claims,
**characterised in that** the display device (18) of the mobile terminal (12) is calibrated for the entire operation of the mobile terminal (12) or for the use of one or more applications installed on the mobile terminal (12).

5. Method according to any of the preceding claims,
**characterised in that** a plurality of calibration colours are displayed one after the other by means of the display device (18) of the mobile terminal (12), a plurality of calibration images that each reproduce at least one calibration colour being generated by recording the display device (18) of the mobile terminal (12) by means of the camera (26) of the domestic appliance (14), and the display device (18) of the mobile terminal (12) being calibrated on the basis of the deviations of the colour values of the calibration images from the respective calibration colours.

6. Method according to any of the preceding claims,
**characterised by** the step of:
- starting a calibration function of the domestic appliance (14), which causes the domestic appliance (14) to generate one or more calibration images by recording by means of the camera (26) of the domestic appliance (14) and to provide the one or more generated calibration images to the central computer unit (16) and/or the mobile terminal (12),
the start of the calibration function of the domestic appliance (14) being initiated by an application on the mobile terminal (12) or manually on the domestic appliance (14).

7. Method according to any of the preceding claims,
**characterised in that** the domestic appliance (14) is designed as a cooking appliance that has a cooking chamber (20) for preparing food, the camera (26) of the domestic appliance (14) being aligned with the cooking chamber (20).

8. Calibration system (10) comprising
- a mobile terminal (12) that has a display device (18) and is designed to display at least one calibration colour by means of the display device (18); and
- a domestic appliance (14) that has a camera (26) and is designed to generate a calibration image that reproduces the calibration colour by recording the display device (18) of the mobile terminal (12) by means of the camera (26) while the mobile terminal (12) is arranged within the domestic appliance (14);
wherein the mobile terminal (12) is designed to calibrate the display device (18) on the basis of the deviations of the colour values of the calibration image from the calibration colour.

9. Calibration system (10) according to claim 8,
**characterised by** a central computer unit (16) that is designed to determine display correction values for calibrating the display device (18) of the mobile terminal (12) by evaluating the deviations of the colour values of the calibration image from the calibration colour.

## Revendications

1. Procédé permettant le calibrage d'un dispositif d'affichage (18) d'un terminal mobile (12), comportant les étapes :
- d'affichage d'au moins une couleur de calibrage à l'aide du dispositif d'affichage (18) du terminal mobile (12) ;
- de génération d'une image de calibrage reproduisant la couleur de calibrage en enregistrant le dispositif d'affichage (18) du terminal mobile (12) à l'aide d'une caméra (26) d'un appareil électroménager (14) ; et
- de calibrage du dispositif d'affichage (18) du terminal mobile (12) en fonction des écarts des valeurs de couleur de l'image de calibrage par rapport à la couleur de calibrage
**caractérisé en ce que** le terminal mobile (12) est disposé à l'intérieur de l'appareil électroménager (14) lors de la génération de l'image de calibrage.

2. Procédé selon la revendication 1,
**caractérisé par** au moins l'une des étapes suivantes :
- envoi de l'image de calibrage de l'appareil électroménager (14) à une unité informatique centrale (16) ;
- détermination de valeurs de correction d'affichage pour le calibrage du dispositif d'affichage (18) du terminal mobile (12) en évaluant les écarts des valeurs de couleur de l'image de calibrage par rapport à la couleur de calibrage par l'unité informatique centrale (16) ;
- envoi des valeurs de correction d'affichage déterminées pour le calibrage du dispositif d'affichage (18) du terminal mobile (12) de l'unité informatique centrale (16) au terminal mobile (12).

3. Procédé selon l'une des revendications précédentes,
**caractérisé par** au moins l'une des étapes suivantes :
- envoi de l'image de calibrage ou d'informations de l'appareil électroménager (14) au terminal mobile (12), les informations permettant au terminal mobile de sélectionner ou de générer une image de calibrage ;
- détermination de valeurs de correction d'affichage pour le calibrage du dispositif d'affichage (18) du terminal mobile (12) en évaluant les écarts des valeurs de couleur de l'image de calibrage par rapport à la couleur de calibrage par le terminal mobile (12).

4. Procédé selon l'une des revendications précédentes,
**caractérisé en ce que** le calibrage du dispositif d'affichage (18) du terminal mobile (12) est effectué pour tout le fonctionnement du terminal mobile (12) ou pour l'utilisation d'une ou de plusieurs applications installées sur le terminal mobile (12).

5. Procédé selon l'une des revendications précédentes,
**caractérisé en ce que** plusieurs couleurs de calibrage sont affichées les unes après les autres au moyen du dispositif d'affichage (18) du terminal mobile (12), plusieurs images de calibrage reproduisant respectivement au moins une couleur de calibrage étant générées en enregistrant le dispositif d'affichage (18) du terminal mobile (12) au moyen de la caméra (26) de l'appareil électroménager (14) et le calibrage du dispositif d'affichage (18) du terminal mobile (12) étant effectué en fonction des écarts des valeurs de couleur des images de calibrage par rapport aux couleurs de calibrage respectives.

6. Procédé selon l'une des revendications précédentes,
**caractérisé par** l'étape :
- de démarrage d'une fonction de calibrage de l'appareil électroménager (14) qui amène l'appareil électroménager (14) à générer une ou plusieurs images de calibrage en enregistrant à l'aide de la caméra (26) de l'appareil électroménager (14) et à transmettre la ou les images de calibrage générées à l'unité informatique centrale (16) et/ou au terminal mobile (12),
dans lequel le démarrage de la fonction de calibrage de l'appareil électroménager (14) est amenée par une application sur le terminal mobile (12) ou manuellement sur l'appareil électroménager (14).

7. Procédé selon l'une des revendications précédentes,
**caractérisé en ce que** l'appareil électroménager (14) est conçu comme un appareil de cuisson qui présente une chambre de cuisson (20) pour la préparation d'aliments, la caméra (26) de l'appareil électroménager (14) étant alignée avec la chambre de cuisson (20).

8. Système de calibrage (10), comportant
- un terminal mobile (12) qui présente un dispositif d'affichage (18) et est configuré pour afficher au moins une couleur de calibrage au moyen du dispositif d'affichage (18) ; et
- un appareil électroménager (14) qui présente une caméra (26) et est configuré pour générer une image de calibrage reproduisant la couleur de calibrage en enregistrant le dispositif d'affichage (18) du terminal mobile (12) à l'aide de la caméra (26) pendant que le terminal mobile (12) est disposé à l'intérieur de l'appareil électroménager (14) ;
dans lequel le terminal mobile (12) est configuré pour calibrer le dispositif d'affichage (18) en fonction des écarts des valeurs de couleur de l'image de calibrage par rapport à la couleur de calibrage.

9. Système de calibrage (10) selon la revendication 8,
**caractérisé par** une unité informatique centrale (16) configurée pour déterminer des valeurs de correction d'affichage pour le calibrage du dispositif d'affichage (18) du terminal mobile (12) en évaluant les écarts des valeurs de couleur de l'image de calibrage par rapport à la couleur de calibrage.
